# EUROPÄISCHE PATENTSCHRIFT

(11) **EP 1 495 709 B1**
(45) Veröffentlichungstag und Bekanntmachung des Hinweises auf die Patenterteilung: **11.04.2012**
(21) Anmeldenummer: 04104031.2
(22) Anmeldetag: 07.01.2000
(51) Int. Cl.: A47L 9/14, B01D 46/00, B01D 46/02, B32B 5/26

(54) **Staubfilterbeutel für einen Staubsauger**
Dust filter bag for a vacuum cleaner
Sac filtrant à poussière

(30) Priorität: 07.01.1999 DE 19900209; 29.07.1999 DE 19935355
(43) Veröffentlichungstag der Anmeldung: 12.01.2005
(62) Teilanmeldung aus: 00904883.6
(73) Patentinhaber: Vorwerk & Co. Interholding GmbH, 42275 Wuppertal (DE)
(72) Erfinder: Meyer, Frank, 58675 Hemer (DE); Heider, Uwe, 50354 Hürth (DE)
(74) Vertreter: Müller, Enno

(56) Entgegenhaltungen:
- EP-A- 0 174 273
- EP-A- 0 396 803
- EP-A- 0 960 645
- DE-A- 19 531 343
- DE-C- 19 615 209
- DE-U- 9 407 046
- GB-A- 2 288 749
- DATABASE WPI Section Ch, Week 199415 Derwent Publications Ltd., London, GB; Class D22, AN 1994-123352 XP002138789 -& JP 06 070871 A (MATSUSHITA ELEC IND CO LTD) 15. März 1994 (1994-03-15)
- PATENT ABSTRACTS OF JAPAN Bd. 017, Nr. 409 (C-1091), 30. Juli 1993 (1993-07-30) & JP 05 084191 A (MATSUSHITA ELECTRIC IND CO LTD), 6. April 1993 (1993-04-06)
- PATENT ABSTRACTS OF JAPAN Bd. 011, Nr. 133 (C-418), 25. April 1987 (1987-04-25) & JP 61 271013 A (OJI SEITAI KK), 1. Dezember 1986 (1986-12-01)

## Beschreibung

Die Erfindung betrifft zunächst einen Staubfilterbeutel für einen Staubsauger mit einer Halteplatte und einem Staubbeutel, wobei gegebenenfalls der Staubbeutel mehrlagig ist und eine Lage aus einem Adsorptionsmaterial wie Aktivkohle oder Zeolithe aufweist.

Bezüglich Staubfilterbeuteln ist es bekannt, vgl. DE 196 15 209 C1, eine Lage eines mehrlagigen Staubbeutels als Partikelfiltereigenschaften aufweisende Decklage oder Mittellage auszubilden, wobei eine solche aus Filterpapier bestehende Lage mit Adsorberpartikeln imprägniert oder belegt sein kann.

Aus den Patent Abstracts of Japan Veröffentlichungsnummer 61271013 ist es bekannt, Filterpapier eines Staubfilterbeutels mit Huminsäure zu behandeln. Hierzu wird das Papier mit einer Huminsäurelösung beschichtet, wobei die Huminsäurelösung auch Eisenoxidpulver oder Aktivkohle eingemischt enthalten kann. Aus den Patent Abstracts of Japan Veröffentlichungsnummer 05084191 ist es bekannt, den Staubbeutel eines Staubfilterbeutels aus Vlies herzustellen und hierfür Aktivkohlefaserpapier zu verwenden. Vergleichbares ist auch aus der JP 19920228241 und der nicht vorveröffentlichten EP 0960645 A2 bekannt.

Aus der DE 195 31343 A1 ist es bekannt, in dem Filterraum eines Staubsaugers, in den der Staubbeutel einzubringen ist, ein den Staubbeutel teilweise umgebendes, als Filter mit geruchsabsorbierender Substanz ausgebildetes Kammerteil vorzusehen. Die Substanz kann Aktivkohle oder Stoffe aus der Zeolithgruppe enthalten.

Im Hinblick auf den angegebenen Stand der Technik stellt sich der Erfindung die Aufgabe, einen Staubfilterbeutel anzugeben, welcher hinsichtlich der Geruchsfiltereigenschaften verbessert ist.

Diese Aufgabe ist beim Gegenstand des Anspruches 1 gelöst, wobei darauf abgestellt ist, dass das Adsorptionsmaterial unter Aufnahme in einem eine poröse dreidimensionale Gerüststruktur aufweisenden Trägermaterial zwischen zwei Lagen des Staubbeutels lose angeordnet ist

Durch das in einem eine dreidimensionale Gerüststruktur aufweisenden Trägermaterial zwischen zwei Lagen des Staubbeutels lose angeordnete Adsorptionsmaterial steht eine große Adsorptionsfläche zur Verfügung. Die geruchsadsorbierende Substanz ist in unmittelbarster Nähe zum aufgesaugten Staub positioniert. Ein dem Filterbeutel nachgeschalteter Geruchsfilter kann entfallen. Ist der Filterbeutel vor einem Sauggebläsemotor angeordnet, kann an dieser Stelle ein sogenannter Katastrophenfilter in Form eines Filzfilters zu Einsatz kommen.

Als geruchsadsorbierendes Material kommt nicht nur Aktivkohle in Frage, sondern alle Materialien, welche bei einer sehr hohen Porosität eine sehr hohe (innere) Oberfläche bieten. Dies sind zum einen auch sogenannte Molekularsiebe und Zeolithe, aber auch dünne Fasern mit Durchmessern in der µm-Skala, insbesondere wenn diese verascht werden können oder wenn ihre (innere) Oberfläche durch andere Prozesse, bspw. mikroskopische Blasenbildung, deutlich vergrößert werden kann. Insbesondere die Geruchsadsorption an solchen dünnen Fasern ist prädestiniert für die Kombination mit einem Partikelfilter, da die geruchsadsorbierenden Fasern selbst die Partikelabscheidung des Gesamtfilters auch für Partikel im µm-Bereich noch signifikant erhöhen können. Weiter ist es denkbar, in dem Filterbeutel eine Lage eines beschichteten und gefüllten Mediums einzubringen, welches Partikel ausfiltert und zusätzlich die Geruchsbelästigung ausschließt, wobei die Besthichtung/Befüllung mit dem Geruchsfilter so ausgelegt wird, dass dieser eine Saugperiode bis zum Staubbeutelwechsel aktiv ist. Im Gegensatz zum bekannten Stand der Technik würde das Verschmutzen des Geruchsfilters vom Benutzer nicht bemerkt

Des Weiteren kann vorgesehen sein, dass das Adsorptionsmaterial zwischen einer inneren Vlieslage und einer äußeren, hochwertigen Partikelfilterlage angeordnet ist. Die losen Adsorptionsteilchen können hierbei reibschlüssig zwischen den beiden Beutellagen gehalten sein. Es kann eine Wattelage zur Lagesicherung des Adsorbens eingelegt sein. Zudern erweist es sich als besonders vorteilhaft, dass die Adsorptionslage eine Mittellage ist. So ist die verschmutzte Adsorptionslage in einer Zwischenlage des Filterbeutels gepackt, so dass der Benutzer mit dieser Lage nicht in Berührung kommt. Zufolge vorliegender Erfindung ist eine jederzeit optimal funktionierende Geruchsfilterung gegeben, welche unbewusst vom Benutzer bei jedem Staubbeutelwechsel hygienisch und lageorientiert ausgetauscht wird. Zudem kann bei einer Anordnung des Adsorptionsmaterials zwischen zwei Filterlagen vorgesehen sein, dass die Adsorption bodenseitig des Filterbeutels nicht vorgesehen ist, dies insbesondere bei derartigen Filterbeuteln, welche bodenseitig eine ausgesteifte Lage, bspw. aus einem Pappe/Papier-Werkstoff bestehenden Beutelboden aufweist.

Nachstehend ist die Erfindung anhand der beigefügten Zeichnung, welche lediglich mehrere Ausführungsbeispiele darstellt, näher erläutert. Es zeigt:
- Fig. 1: einen Staubsauger in Form eines Handstaubsaugers in Perspektive;
- Fig. 2: einen erfindungsgemäßen Filterbeutel in einer perspektivischen Ein- zeldarstellung;
- Fig. 3: den Schnitt gemäß der Linie IH-III;
- Fig. 4: eine der Fig. 3 entsprechende Schnittdarstellung, eine alternative, nicht beanspruchten Ausgestaltung betreffend;
- Fig. 5: eine Schnittdarstellung eines Staubfilterbeutels in einer weiteren, nicht beanspruchten. Aus- gestaltung;
- Fig. 6: eine Schnittdarstellung einer Filterkammer mit einemeingesetzten Staubfilterbeutel, eine weitere, nicht beanspruchten Ausgestaltung betreffend.

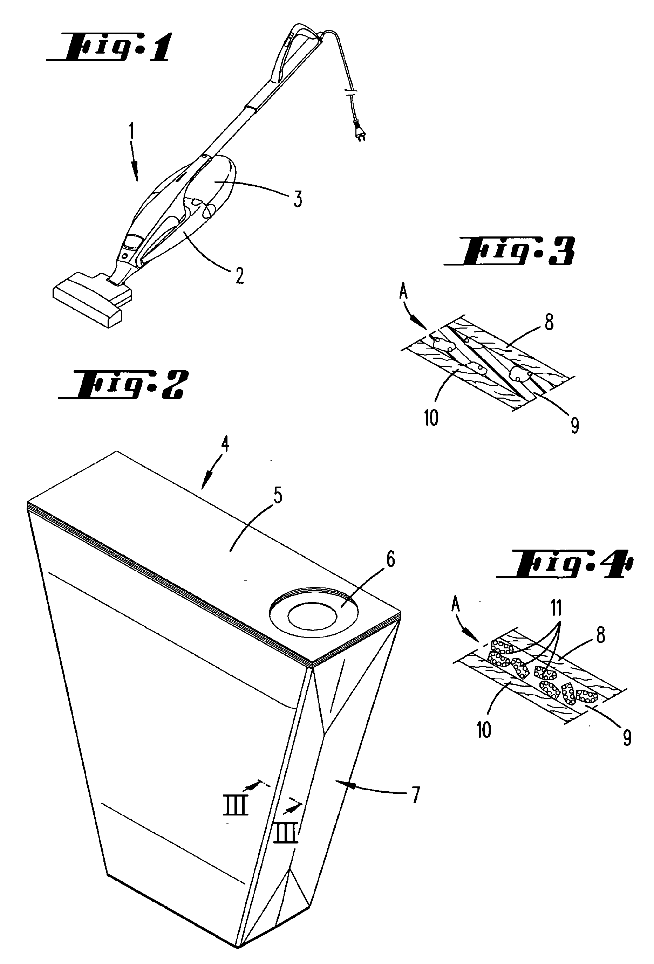

Dargestellt und beschrieben ist zunächst mit Bezug zu Fig. 1 ein Staubsauger 1 mit einem Motorgehäuse 2 und einer an diesem schwenkbar angeordneten Kassette 3 zur Aufnahme eines in Fig. 2 in einer Einzeldarstellung gezeigten Filterbeutels 4.

Der Filterbeutel 4 besitzt eine Halteplatte 5, bspw. aus einem Pappe/PapierWerkstoff mit einer Stutzenöffnung 6. Unterseitig der Halteplatte 5 ist an dieser zur Bildung des Filterbeutels 4 ein Staubbeutel 7 angeordnet, bspw. angeklebt.

Dieser Staubbeutel 7 besteht in dem dargestellten Ausführungsbeispiel aus drei übereinander angeordneten Lagen 8 bis 10, wobei die innere Lage 8 und die äußere Lage 10 bspw. übliche Papierfilterlagen zur Ausfiltrierung des mit dem Saugluftstrom in den Filterbeutel 4 transportierten Schmutz. Zwischen diesen beiden Staubfilterlagen 8 und 10 ist eine Geruchsfilterlage 9 angeordnet, welche ein Adsorptionsmaterial A, in dem gezeigten Ausführungsbeispiel Aktivkohle, aufweist, welch letzteres wiederum in einem Trägermaterial aufgenommen ist. Dieses Trägermaterialweist hierbei eine poröse, dreidimensionale Gerüststruktur auf und kann bspw. aus offenporigem Schaumstoff, gegebenenfalls retikuliertem Schaumstoff oder einem Vlies bestehen. Darüber hinaus sind auch andere Materialien zur Geruchsadsorption einsetzbar, welche bei einer sehr hohen Porosität eine sehr hohe (innere) Oberfläche bieten. Dies können zum einen sogenannten Molekularsiebe und Zeolithe aber auch dünne Fasern, insbesondere wenn diese verascht werden können oder wenn ihre (innere) Oberfläche durch andere Prozesse, wie bspw. mikroskopische Blasenbildung, deutlich vergrößert werden kann. Werden dünne Fasern als Adsorptionsmaterial A eingesetzt, so ergibt sich hieraus in Kombination mit den Partikelfilterlagen 8 und 10 der Vorteil, dass die geruchsadsorbierenden Fasern selbst die Partikelabscheidung des Gesamtfilters für Partikel im µm-Bereich signifikant erhöhen können.

In dem gezeigten Ausführungsbeispiel ist - jedoch nicht dargestellt - eine bodenseitige Anordnung der Adsorptionslage nicht vorgesehen.

Durch die erfindungsgemäße Ausgestaltung ergeben sich Vorteile für den Benutzer. Der von Feinststaub durchsetzte Geruchsfilter in Form einer Adsorptionslage 9 innerhalb des Filterbeutels 4 wird zum Wechseln desselben nicht mehr gefasst. Vielmehr wird in üblicher Weise der Gesamtfilterbeutel 4 mitsamt dem Geruchsfilter bei füllgradbedingtem Wechsel ausgetauscht. Der Benutzer muss zum Wechsel beider Filter (Staub- und Geruchsfilter) lediglich nur auf einen Indikator (Filterwechselanzeige) achten.

Weiter erreichen zufolge dieser Ausgestaltung die durch Zersetzung im Staubbeutel 7 entstehenden Gerüche ohne Schwierigkeiten die geruchsadsorbierende Substanz in der Mittellage 9, werden demzufolge hier abgefiltert. Auf diese Weise lässt sich der als unangenehm empfundene Anfangsgeruchsschwall bei Inbetriebnahme des Staubsaugers 1, insbesondere nach längeren Standzeiten, deutlich reduzieren.

In der Fig. 4 ist eine alternative nicht, beanspruchte Ausgestaltung dargestellt, bei welcher die Mittellage (Geruchsfilterlage) aus frei beweglichen Adsorptionsteilchen 11 besteht, wobei bevorzugt die innere Lage 8 eine Vlieslage und die äußere Lage 10 ein hochwertiger Partikelfilter ist

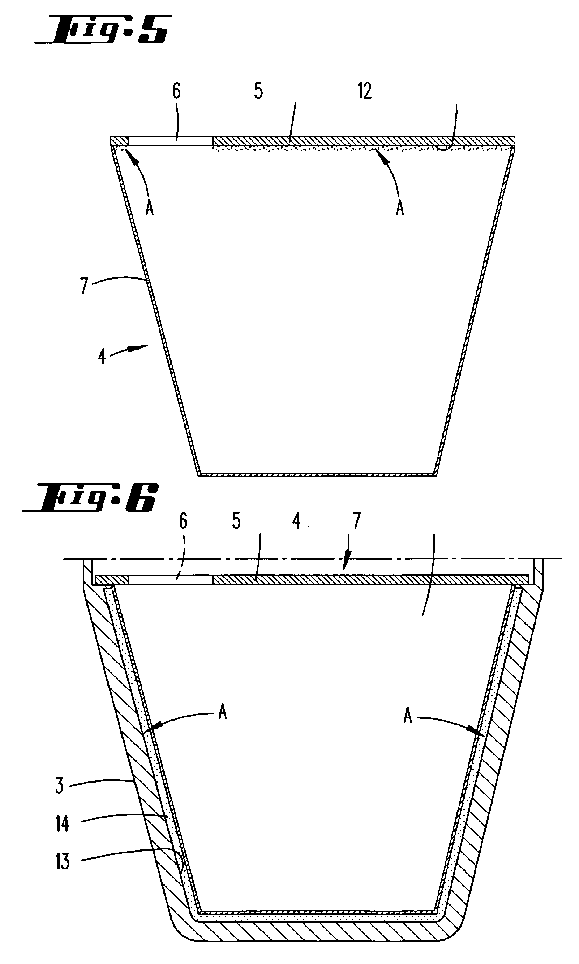

Fig. 5 zeigt eine weitere, nicht beanspruchte Ausgestaltung, bei welchem das Adsorptionsmaterial A auf der Innenfläche 12 der Halteplatte 5 des Staubfilterbeutels 4 angeordnet ist, dies bei im Wesentlichen frei zugänglicher Oberfläche. Beispielsweise kann hierzu das Adsorptionsmaterial A auf die, mit einem Haftstoff versehene Halteplatte 5 aufgestreut sein. Durch diese Maßnahme ist eine große aktive Oberfläche des Adsorptionsmaterials A in einem nicht von der Luft durchströmten Teil des Staubfilterbeutels gegeben. Die sich im Beutelinneren bildenden Geruchsstoffe diffundieren kontinuierlich zum Adsorbens und werden dort gebunden.

Schließlich zeigt Fig. 6 eine weitere, nicht beanspruchte Ausgestaltung, bei welcher die Innenwandung 13 der in der Kassette 3 gebildeten Filterkammer 14 zur Aufnahme des Staubfilterbeutels von dem Adsorptionsmaterial A überdeckt ist. Hierzu ist beispielsweise das Adsorptionsmaterial A direkt auf der Filterkammer-Wandung angeordnet, weiter beispielsweise durch Aufstreuen loser Adsorbensteilchen auf die mit einer Haftschicht versehene Wandung. In vorteilhafter Weise ist hierdurch eine große Adsorptions-Oberfläche gegeben. Eine solche Auskleidung mit Adsorptionsmaterial A ist auch bei Staubsaugern mit einem filterlosen Abscheidesystem denkbar, wobei hier die Innenwandung des Staubsammelraumes mit dem Adsorbens überdeckt ist.

Das Adsorptionsmaterial kann zudem - jedoch nicht dargestellt - an einem in die Filterkammer 14 bzw. Staubsammelraum einzusetzenden Einsatzteil angeordnet sein, wobei letzteres beispielsweise aus einem Papierwerkstoff bestehen kann, auf welches, unter Zwischenschaltung einer Haftschicht, loses Adsorbens aufgestreut ist.

## Patentansprüche

1. Staubfilterbeutel (4) für einen Staubsauger (1) mit einer Halteplatte (5) und einem Staubbeutel (7), wobei der Staubbeutel (7) mehrlagig ist und eine Lage (9) aus einem Adsorptionsmaterial (A), wie Aktivkohle oder Zeolithe, aufweist, **dadurch gekennzeichnet, dass** das Adsorptionsmaterial (A) unter Aufnahme in einem eine poröse dreidimensionale Gerüststruktur aufweisenden Trägermaterial zwischen zwei Lagen (8, 10) des Staubbeutels (7) lose angeordnet ist.

2. Staubfilterbeutel nach Anspruch 1, **dadurch gekennzeichnet, dass** die Lagen (8, 10) aus einer inneren Vlieslage und einer äußeren Partikelfilterlage bestehen.

3. Staubfilterbeutel nach einem der Ansprüche 1 oder 2, **dadurch gekennzeichnet, dass** die Adsorption bodenseitig des Staubbeutels nicht vorgesehen ist.

## Claims

1. Dust filter bag (4) for a vacuum cleaner (1) having a holding plate (5) and a dust bag (7), the dust bag (7) being multi-layered and comprising a layer (9) made of an adsorption material (A), such as activated carbon or zeolites, **characterised in that** the adsorption material (A) is loosely arranged between two layers (8, 10) of the dust bag (7) and is accommodated in a carrier material having a porous three-dimensional frame structure.

2. Dust filter bag according to claim 1, **characterised in that** the layers (8, 10) consist of an inner non-woven layer and an outer particle filter layer.

3. Dust filter bag according to either claim 1 or claim 2, **characterised in that** the adsorption is not provided at the base of the dust bag.

## Revendications

1. Sac filtrant à poussière (4) pour un aspirateur à poussière (1), avec une plaque de maintien (5) et un sac à poussière (7), le sac à poussière (7) étant à plusieurs couches et présente une couche (9) composée d'un matériau absorbant (A), tel que du charbon actif ou de la zéolithe, **caractérisé en ce que** le matériau absorbant (A) est disposé de manière lâche entre deux couches (8, 10) du sac à poussière (7), en étant logé dans un matériau support présentant une structure spatiale tridimensionnelle poreuse.

2. Sac filtrant à poussière selon la revendication 1, **caractérisé en ce que** les couches (8, 10) sont composées d'une couche de non-tissé intérieure et d'une couche de filtre à particules extérieure.

3. Sac filtrant à poussière selon l'une des revendications 1 ou 2, **caractérisé en ce que** l'absorption n'est pas prévue du côté fond du sac à poussière.
